# DEMANDE DE BREVET EUROPEEN

(11) **EP 4 846 843 A1**
(43) Date de publication de la demande: **02.12.2026**
(21) Numéro de dépôt: 26180997.4
(22) Date de dépôt: 26.05.2026
(51) Int. Cl.: A01M 1/06, A01M 1/02, A01M 1/08

(54) **PIÈGE POUR INSECTES VOLANTS**

(30) Priorité: 27.05.2025 FR 2505712
(71) Demandeur: AXXI, SAS, 35390 Grand-Fougeray (FR)
(72) Inventeur: LE QUERE, Tanguy, 35135 Chantepie (FR); LE SAEC, Robin, 49610 Murs-Érigné (FR)
(74) Mandataire: Vidon Brevets & Stratégie

(57) **Abrégé**

L'invention concerne un piège (100) pour insectes volants, comprenant :
- un caisson (110) logeant des moyens d'aspiration pour générer un flux d'aspiration (F), et
- des moyens de retenue des insectes volants charriés par le flux d'aspiration (F), caractérisé en ce que :
- le caisson (110) comprend une paroi support et au moins deux parois inclinées (112) par rapport à la paroi support ;
- les moyens d'aspiration comprennent, pour chaque paroi inclinée (112), au moins une bouche d'aspiration (122) et des ouvertures (115) d'évacuation d'air depuis l'intérieur du caisson (110) vers l'extérieur du caisson (110), réparties à la périphérie de la bouche d'aspiration (122).

## Description

### Domaine de l'invention

Le domaine de l'invention est celui de la conception et de la fabrication des dispositifs de lutte contre les insectes volants.

Plus particulièrement, l'invention concerne un piège pour insectes volants.

### État de la technique

Par insectes volants, on entend aussi bien les mouches, les moucherons, les moustiques ou bien tous les insectes volants et pouvant nuire à la tranquillité d'un humain ou d'un animal, en volant à sa proximité et/ou en le/la piquant. Les piqûres génèrent des démangeaisons voire la transmission de maladies, notamment des maladies vectorielles telles que la dingue ou encore le chikungunya.

Dans la suite de cette description, nous prendrons comme exemple particulier d'insecte volant le moustique, sachant que le piège selon l'invention pourrait être utilisé pour d'autres insectes volants tels que ceux précités.

Depuis tout temps, l'Homme cherche ainsi à se protéger des nuisibles par divers moyens.

Pour cela, de nombreux appareils ont été développés.

On peut par exemple citer les dispositifs lumineux qui attirent les moustiques et les tuent en les électrocutant avec un courant puissant. Même si ces dispositifs ont été développés pour lutter contre les mouches, ils sont souvent utilisés contre les moustiques bien que leur efficacité contre les moustiques reste faible.

L'efficacité de ces dispositifs lumineux est toutefois très relative. Par ailleurs de tels dispositifs sont énergivores, provoquent une nuisance sonore lors de leur fonctionnement, et demandent une maintenance régulière et importante des organes d'émission de lumière. En outre, ces dispositifs lumineux sont peu hygiéniques puisque, une fois morts, les insectes ne sont pas évacués, ce qui peut engendrer une pourriture, voire des odeurs désagréables. Enfin, les dispositifs lumineux présentent également un risque d'utilisation lorsqu'ils sont utilisés en milieux extérieurs, notamment par rapport à l'humidité.

D'autres dispositifs tels que les diffuseurs de produits destinés à tuer les moustiques peuvent être branchés électriquement sur une prise de courant ou être couplés à une batterie ou une cartouche de gaz afin d'assurer une diffusion continue de produit insecticide.

Tout comme les dispositifs lumineux, leur efficacité est relative au regard du besoin d'intervention des utilisateurs pour les recharger en produits insecticides et/ou remplacer leur source d'alimentation. En outre, certaines études ont démontré que les produits diffusés peuvent présenter un risque pour la santé par une exposition trop intense. L'exposition aux produits insecticides est inévitable puisque lesdits produits se répandent via l'air autour du dispositif de diffusion, air qui est aspiré par les utilisateurs directement ou peut venir au contact d'aliments consommé par les utilisateurs par exemple. Il a d'ailleurs été constaté un durcissement des règles dans la vente et l'utilisation de produits insecticides au regard de leur nocivité.

Pour répondre au durcissement des règles de commercialisation des produits insecticides, il a été développé des dispositifs permettant de capturer les moustiques. Ces dispositifs sont de plus en plus efficaces notamment grâce à l'étude du vol des moustiques.

En effet, il a été démontré que les moustiques s'approchent de leurs cibles, ici des humains, de la manière suivante.

Dans un périmètre jusqu'à 100 mètres environ de leur cible, les moustiques détectent et sont attirés par le dioxyde de carbone CO2 rejeté par les humains.

Dans un second temps, dans un périmètre d'environ 10 mètres à 15 mètres, les moustiques détectent et sont attirés par les composés organiques volatiles tels que ceux émis par la transpiration humaine puis, à mesure qu'il se rapprochent de leur cible, la détection et l'attrait se fait de manière visuelle par le contraste offert par la cible par rapport à l'environnement qui l'entoure.

Enfin, à quelques centimètres de la cible, le moustique est sensible et attiré par la chaleur dégagée par sa cible.

Il a également été observé que, pour ne pas être détectés par leurs cibles, les moustiques, lorsqu'ils sont à quelques centimètres de leurs cibles, évitent le CO2, notamment les voies respiratoires, ce qui explique que la majorité des piqûres sont situées sur les jambes ou le torse.

A partir de ces observations, des pièges ont été développés, ces pièges comprenant :
- un caisson ;
- des moyens d'aspiration logé dans le caisson et destiné à générer un flux d'aspiration depuis l'extérieur du caisson vers l'intérieur du caisson pour aspirer les insectes volants, et
- des moyens de retenue des insectes volants charriés par le flux d'aspiration.

Si ces pièges sont plus efficaces que les dispositifs précités, ils restent perfectibles, notamment en termes d'efficacité pour la capture des moustiques.

L'invention permet ainsi d'améliorer l'efficacité des pièges connus.

### Objectifs de l'invention

L'invention a notamment pour objectif de pallier les inconvénients de l'art antérieur.

Plus précisément, l'invention a pour objectif de proposer un piège pour insectes volants offrant une meilleure efficacité que les pièges selon l'art antérieur.

L'invention a également pour objectif de fournir un tel piège qui soit simple de conception, de fabrication et d'utilisation.

L'invention a en outre pour objectif de fournir un tel piège qui soit adaptable à la capture d'insectes effectuant des trajectoires d'approche descendantes ou des trajectoires de fuite montantes.

### Exposé de l'invention

Ces objectifs, ainsi que d'autres qui apparaîtront par la suite, sont atteints grâce à l'invention qui a pour objet un piège pour insectes volants, comprenant :
- un caisson ;
- des moyens d'aspiration logé dans le caisson et comprenant un dispositif d'aspiration destiné à générer un flux d'aspiration depuis l'extérieur du caisson vers l'intérieur du caisson pour aspirer les insectes volants, et
- des moyens de retenue des insectes volants charriés par le flux d'aspiration,
caractérisé en ce que :
- le caisson comprend une paroi support s'étendant selon un plan transversal à la direction de la gravité et au moins deux parois inclinées par rapport à la paroi support ;
- les moyens d'aspiration comprennent, pour chaque paroi inclinée, au moins une bouche d'aspiration, les dites bouches d'aspiration étant reliées à un collecteur dirigeant le flux d'aspiration vers les moyens de retenue, et
le caisson présente des ouvertures d'évacuation d'air depuis l'intérieur du caisson vers l'extérieur du caisson, lesdites ouvertures étant réparties à la périphérie de la bouche d'aspiration.

Les ouvertures d'évacuation permettent une sortie d'une partie au moins de l'air hors du caisson, l'air sortant par lesdites ouvertures étant réaspiré par les bouches d'aspiration de sorte à créer une recirculation d'air.

Cette recirculation d'air permet de créer un gradient d'air homogène et dirigé. Ce gradient limite les courants d'air trop importants pour favoriser l'aspiration des insectes qui sont alors moins apeurés comparativement à un effet d'aspiration fort. En d'autres termes, ce gradient limite le déclenchement d'une réponse de fuite des insectes qui sont sensibles aux brusques variations d'air, ces dernières pouvant être considérées comme une attaque.

En d'autres termes, les insectes sont aspirés dans le flux d'air sans s'en rendre compte, ce qui rend le piège particulièrement efficace en optimisant le volume de capture.

Selon un aspect avantageux, le piège comprend également des moyens anti-retour, positionnés entre les bouches d'aspiration et les moyens de retenue pour maintenir les insectes captifs du piège.

Les moyens anti-retour permettent de retenir les insectes capturés dans les moyens de retenue en toutes circonstances ou quasiment.

Selon un autre aspect avantageux, les moyens de retenue se présentent sous la forme d'un tiroir monté amovible dans le caisson.

Un tel tiroir facilite l'utilisation du piège, notamment en ce qui concerne l'extraction des insectes capturés.

Selon un autre aspect avantageux, le tiroir comporte des panneaux perméables à l'air permettant le passage du flux d'aspiration.

De tels panneaux perméables favorisent la circulation de l'air au bénéfice de l'effet de recirculation et pour la capture des insectes comme expliqué précédemment.

Selon un autre aspect avantageux, le caisson présente une trappe d'accès pour l'extraction des moyens de retenue hors du caisson.

La présence d'une trappe d'accès permet une fermeture du caisson pour limiter les perturbations dans le flux d'air tout en facilitant l'extraction des insectes capturés.

Selon un autre aspect avantageux, le piège comprend également un dispositif de diffusion d'une substance attractive d'insectes volants.

La diffusion d'une substance attractive permet d'améliorer le pouvoir de capture du piège. En effet, la combinaison de la diffusion d'une substance attractive avec la recirculation précitée favorise l'attraction des insectes qui entrent alors dans le flux d'air aspiré et sont capturés.

Selon un autre aspect avantageux, le dispositif de diffusion est logé dans le caisson.

Cela bénéficie encore au pouvoir d'attraction des insectes par le piège.

Selon un autre aspect avantageux, le caisson présente une ceinture périphérique intercalée entre la paroi support et les parois inclinées, la ceinture périphérique présentant des fentes secondaires permettant l'extraction d'une partie du flux d'aspiration, ledit flux d'aspiration se chargeant de la substance attractive via le dispositif de diffusion.

Les fentes secondaires permettent une extraction d'air hors du piège selon un flux dirigé. L'air, chargé de substance attractive, est ainsi dispersé autour du piège pour permettre l'attraction des insectes, notamment dans un périmètre de 10 mètres autour du piège dans le cas des moustiques. L'air environnant permet de disperser la substance attractive au-delà de 10 mètres, jusqu'à 100 mètres autour du piège environ.

Selon un autre aspect avantageux, le dispositif d'aspiration intègre au moins un ventilateur, ledit dispositif d'aspiration étant positionné entre le collecteur et les moyens de retenue.

Une telle disposition du dispositif d'aspiration favorise l'effet d'aspiration et de retenue des insectes capturés dans les moyens de retenue.

En effet, rien ne diminue l'effet d'aspiration entre les moyens d'aspiration et les bouches d'aspiration et le flux d'air généré par les moyens d'aspiration présente une force suffisamment importante pour prévenir de la remontée dudit flux d'air par les insectes capturés. Cela bénéficie alors à la consommation énergétique du dispositif, qui peut être contenue puisque le ventilateur peut être agrandi pour présenter une faible vitesse de rotation à puissance d'aspiration égale, ainsi qu'à la faible nuisance sonore générée par le dispositif en fonctionnement.

Selon un autre aspect avantageux, les moyens de retenue sont positionnés entre le dispositif d'aspiration et le collecteur, le dispositif d'aspiration intégrant au moins un ventilateur.

Cette variante de réalisation permet de diminuer le taux de mortalité des insectes capturés qui viendraient buter contre les pales du ventilateur. Une telle variante de réalisation est avantageuse dans le cadre de la capture d'insectes en vue de les étudier puisque les insectes restent vivants et conservent des caractéristiques d'identification qui disparaissent lorsque les insectes sont abîmés ou asséchés. Éventuellement, une paroi déflectrice peut diriger les insectes capturés vers une zone de retenue située en dehors du flux d'aspiration de sorte à éviter une fatigue trop importante des insectes qui luttent contre le flux d'aspiration, ce qui nuirait à la préservation de leurs caractéristiques d'identification.

Selon un autre aspect avantageux, le dispositif d'aspiration intègre au moins un ventilateur.

L'utilisation d'un ventilateur (ou de plusieurs) permet de créer un flux d'aspiration efficace avec une consommation énergétique maîtrisée.

Par ailleurs, en modulant la vitesse de rotation du ou des ventilateurs, il est possible de moduler la puissance d'aspiration flux d'aspiration. Cela permet alors d'adapter le piège à son milieu environnant et/ou aux différentes espèces d'insectes à capturer.

Selon un autre aspect avantageux, les bouches d'aspiration présentent une première couleur et le caisson présente une deuxième couleur différente de la première couleur pour créer un contraste entre les bouches d'aspiration et le caisson.

Cela favorise l'attraction des insectes volants.

Selon un autre aspect avantageux, la première couleur est une couleur sombre et la deuxième couleur est une couleur claire, ou inversement.

L'utilisation d'une couleur sombre et d'une couleur claire assure une identification visuelle, et donc attractive, pour les insectes. En outre, cela permet de limiter l'impact visuel du piège qui peut alors se fondre dans l'environnement dans lequel il est installé.

### Figures

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés décrits ci-après.
[Fig. 1] La figure 1 est une représentation schématique en perspective de dessus d'un piège selon l'invention.
[Fig. 2] La figure 2 est une représentation schématique en perspective de dessous du piège selon l'invention.
[Fig. 3] La figure 3 est une représentation schématique en coupe transversale du piège selon l'invention.
[Fig. 4] La figure 4 est une représentation schématique en coupe transversale d'un détail du piège selon l'invention.
[Fig. 5] La figure 5 est une représentation schématique illustrant un effet de recirculation d'air du piège selon l'invention.
[Fig. 6] La figure 6 est une représentation schématique en coupe transversale d'un détail du piège selon l'invention, selon une variante de réalisation.

### Description détaillée de l'invention

De mêmes éléments ont été désignés par de mêmes références dans les différentes figures. En particulier, les éléments structurels et/ou fonctionnels communs aux différents exemples de réalisation peuvent présenter les mêmes références et peuvent disposer de propriétés structurelles, dimensionnelles et matérielles identiques.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures. Sauf précision contraire, les expressions "environ", "approximativement", "sensiblement", et "de l'ordre de" signifient à 10 % près, de préférence à 5 % près.

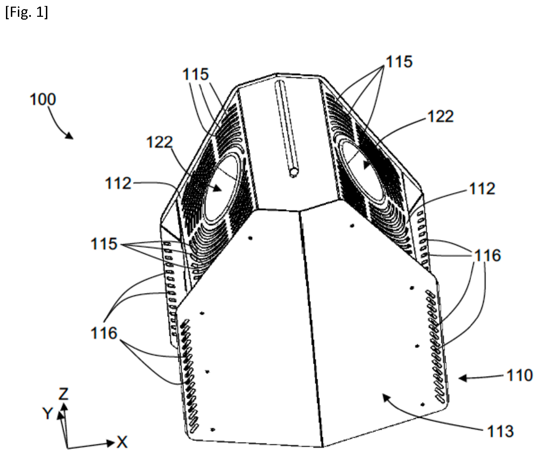

En référence à la figure 1, un piège 100 pour insectes volants est représenté.

Le piège 100, comprend un caisson 110 intégrant une paroi support 111. La paroi support 111 permet ainsi de poser ou de suspendre le piège 100 en vue de son utilisation.

On définit par rapport au piège 100 un repère orthogonal XYZ comprenant trois axes perpendiculaires deux à deux, à savoir :
- un axe X, définissant une direction longitudinale, horizontale ;
- un axe Y, définissant une direction transversale, horizontale, qui avec l'axe X définit un plan XY horizontal, et
- un axe Z, définissant une direction verticale, perpendiculaire au plan XY horizontal.

La paroi support 111 s'étend selon un plan transversal à la direction de la gravité, c'est-à-dire selon le plan XY tel que défini par le trièdre orthogonal.

Comme illustré par la figure 1, le caisson 110 comprend au moins deux parois inclinées 112 par rapport à la paroi support 111. En l'espèce, le piège selon le mode de réalisation illustré par la figure 1 comprend uniquement deux parois inclinées 112.

Les deux parois inclinées 112 sont opposées l'une par rapport à l'autre et s'étendent selon deux directions convergentes dans une portion supérieure du piège 100. En d'autres termes, les deux parois inclinées 112 forment un toit au piège 100 tel que cela sera expliqué et compris par la suite.

Les deux parois inclinées 112 sont inclinées par rapport à la paroi support 111 d'un angle compris entre 70° et 85°, ledit angle étant mesuré sur l'intérieur du piège 100. De préférence, les parois inclinées 112 sont inclinées d'un angle compris entre 80° et 85° par rapport à la paroi support 111.

La paroi support 111 est reliée aux deux parois inclinées 112 par l'intermédiaire d'une ceinture périphérique 113.

Selon le mode de réalisation illustré par la figure 1, le piège 100 présente une forme sensiblement parallélépipédique. Ainsi, la ceinture périphérique 113 définit une paroi avant, une paroi arrière et deux parois latérales.

Selon une variante non illustrée par les figures, la ceinture périphérique 113 pourrait être de section circulaire.

La ceinture périphérique 113 présente des fentes secondaires 116 permettant l'extraction d'une partie du flux d'aspiration. Comme cela sera expliqué par la suite, le flux d'aspiration se charge d'une substance attractive avant d'être éjecté hors du caisson 110.

Pour permettre la capture d'insectes, le piège 100 comprend, logés dans le caisson 110 :
- des moyens d'aspiration 120, et
- des moyens de retenue 130.

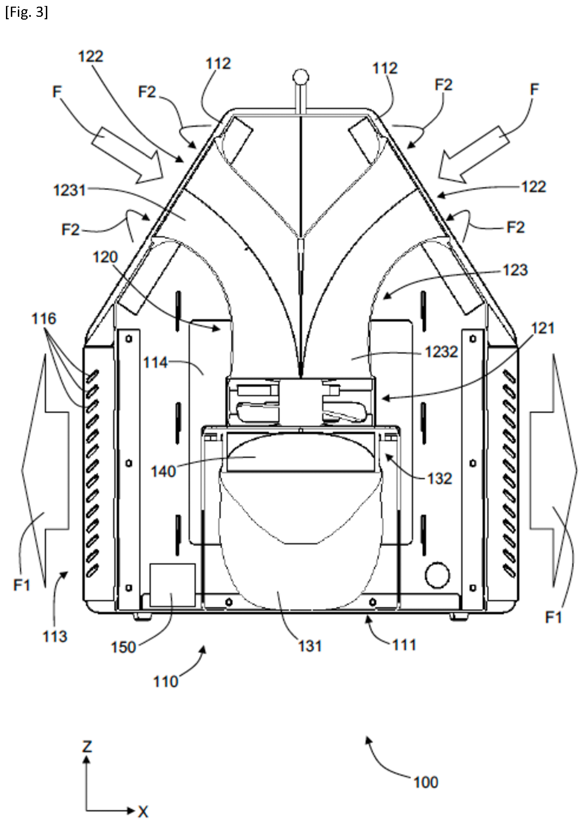

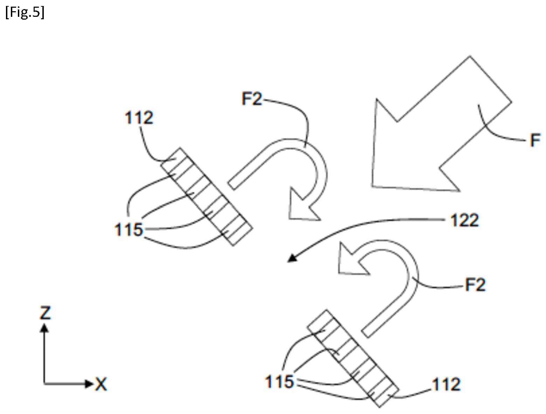

Les moyens d'aspiration 120 comprennent un dispositif d'aspiration 121 destiné à générer un flux F d'aspiration depuis l'extérieur du caisson 110 vers l'intérieur du caisson 110 pour aspirer les insectes volants. Le flux F d'aspiration est illustré par les figures 3 et 5.

En référence aux figures 1 à 3, les moyens d'aspiration 120 comprennent, pour chaque paroi inclinée 112, au moins une bouche d'aspiration 122. En l'espèce, selon le mode de réalisation illustré par les figures 1 à 3, les moyens d'aspiration 120 comprennent une unique bouche d'aspiration 122 pour chaque paroi inclinée 112. La bouche d'aspiration 122 débouche ainsi sur une paroi inclinée 112.

En référence à la figure 1, la bouche d'aspiration 122 est affleurante à la paroi inclinée 112. En d'autres termes, chaque bouche d'aspiration 122 ne fait pas saillie de la paroi inclinée 112.

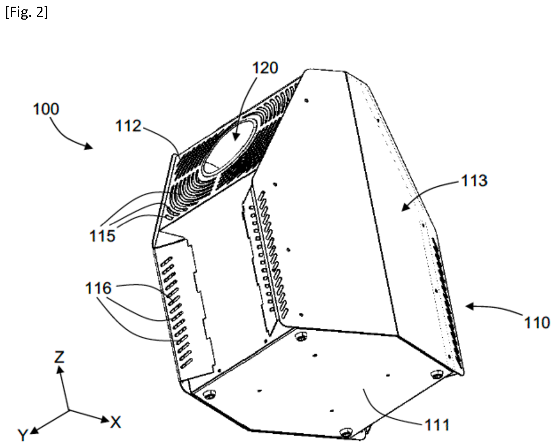

Tel que cela est illustré par la figure 2, les bouches d'aspiration 122 sont reliées à un collecteur 123 dirigeant le flux F d'aspiration vers les moyens de retenue 130.

Le collecteur 123 présente ainsi deux entrées 1231 reliées chacune à une bouche d'aspiration 122, et une sortie 1232. Plus spécifiquement, le collecteur 123 présente une forme de Y conférée par des tubulures définissant les entrées 1231 et reliant un tube formant la sortie 1232.

En référence à la figure 3, les tubulures présentent une forme d'entonnoir allant en s'amincissant depuis les bouches d'aspiration 122 vers le tube.

Cette architecture des tubulures permet de créer un gradient convergent du flux F d'aspiration depuis une vitesse adaptée à l'insecte à capturer pour ne pas provoquer sa fuite, jusqu'à une vitesse d'aspiration qui ne permet pas à l'insecte de sortir du flux F d'aspiration.

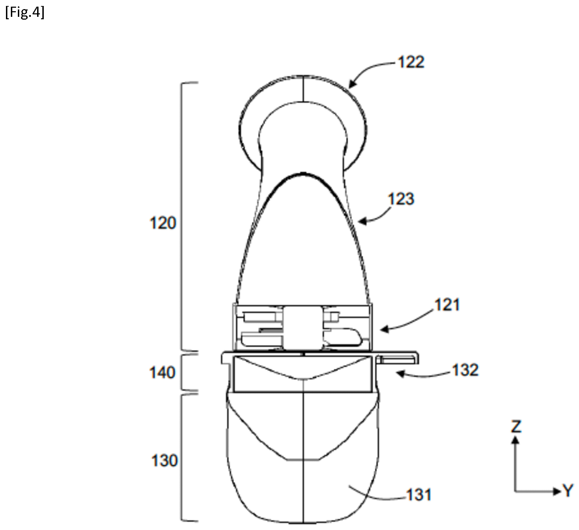

Tel qu'illustré par les figures 3 et 4, les moyens d'aspiration 120 intègrent un dispositif d'aspiration 121 prenant la forme d'au moins un ventilateur.

Le dispositif d'aspiration 121 est positionné entre le collecteur 123 et les moyens de retenue 130.

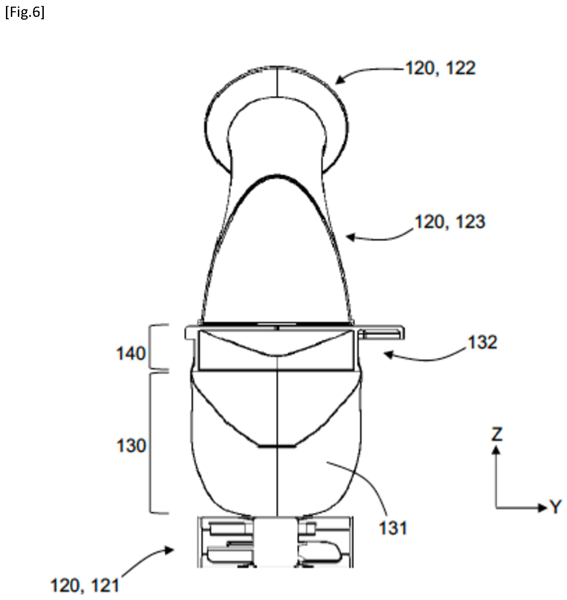

Selon une variante illustrée par la figure 6, les moyens de retenue 130 sont positionnés entre le dispositif d'aspiration 121 et le collecteur 123.

Les moyens de retenue 130 sont destinés à retenir les insectes volants charriés par le flux d'aspiration F.

Pour cela, les moyens de retenue 130 se présentent sous la forme d'un tiroir monté amovible dans le caisson 110.

Le tiroir comporte des panneaux perméables 131 à l'air permettant le passage du flux d'aspiration F tout en permettant de retenir les insectes charriés par le flux d'aspiration F.

A titre d'exemple illustratif et non limitatif, les panneaux perméables 131 sont couplés les uns aux autres et sont formés par un voile définissant une poche.

En variante, un voile ou une paroi perforée pourraient également former les panneaux perméables 131.

Les panneaux perméables 131 sont portés par une armature 132. L'armature 132 est montée coulissante dans le caisson 110 de telle sorte qu'elle définit ainsi le tiroir précité.

Pour permettre l'extraction des insectes piégés, le caisson 110 présente une trappe 114 d'accès. En manipulant la trappe 114 d'accès, un utilisateur peut extraire les moyens de retenue 130 hors du caisson 110.

Le tiroir et la trappe 114 d'accès sont solidaires l'un de l'autre de telle sorte que la seule manipulation de la trappe 114 d'accès permet l'extraction des moyens de retenue 130.

En variante, la trappe 114 et le tiroir pourraient être indépendants l'un de l'autre de sorte que lorsqu'un utilisateur manipule la trappe 114 d'accès, il puisse accéder à l'intérieur du caisson sans que les moyens de retenue 130 ne soient extraits, permettant ainsi la continuité de fonctionnement du piège 100 pour la capture d'insectes volants.

Cela est notamment utile pour des opérations de maintenance par exemple.

Afin de maintenir les insectes captifs, le piège 100 comprend également des moyens anti-retour 140. Les moyens anti-retour 140 autorisent le passage du flux d'aspiration F vers les moyens de retenue 130 pour charrier les insectes capturés, mais empêche la sortie des insectes hors des moyens de retenue 130 à contre-courant.

Les moyens anti-retour 140 sont positionnés entre les bouches d'aspiration 122 et les moyens de retenue 130 tel qu'illustré par les figures 3 et 4.

Plus spécifiquement, les moyens anti-retour 140 sont solidaires du tiroir en étant logés dans l'armature 132 en aval du dispositif d'aspiration 121 selon le sens d'écoulement du flux d'aspiration F.

La présence des moyens anti-retour 140 permet de retenir les insectes piégés dans les moyens de retenue 130 lorsque le dispositif d'aspiration 121 ne génèrent pas de flux d'aspiration F. En effet, en l'absence de flux d'aspiration F, notamment lors d'une absence d'alimentation électrique du dispositif d'aspiration 121, et sans moyens anti-retour, les insectes se trouvant dans les moyens de retenue 130 pourraient remonter les moyens d'aspiration 120 et s'échapper du piège 100 par les bouches d'aspiration 122.

Pour en améliorer son efficacité, le piège 100 comprend également un dispositif de diffusion 150 d'une substance attractive pour les insectes volants.

Tel qu'illustré par la figure 3, le dispositif de diffusion 150 est logé dans le caisson 110 en étant solidaire de la paroi support 111.

Le dispositif de diffusion peut par exemple se présenter sous la forme d'un réceptacle destiné à recevoir une substance attractive qui peut, quant à elle, se présente sous la forme d'une poudre, d'un liquide ou d'un gaz. Le dispositif de diffusion 150 peut être du type passif, c'est-à-dire que le flux d'aspiration F se charge de substance attractive par contact, ou du type actif, c'est-à-dire que le dispositif de diffusion 150 injecte la substance attractive dans le flux d'aspiration F destiné à être éjecté du caisson 110.

L'indépendance de la trappe 114 d'accès et du tiroir des moyens de retenue 130 offre la possibilité d'accéder au dispositif de diffusion 150 pour le recharger sans interrompre la capture des insectes. Sur ce dernier point, il peut être prévu, dans une variante de réalisation, que le dispositif de diffusion 150 soit solidaire du tiroir de sorte que l'extraction du tiroir offre un accès direct au dispositif de diffusion 150.

Lors du fonctionnement du piège 100, le flux d'aspiration F se charge d'attractif avant d'être expulsé hors du piège 100.

Pour cela, le caisson 100 présente des ouvertures 115 d'évacuation d'air depuis l'intérieur du caisson 110 vers l'extérieur du caisson 110.

Tel que cela est illustré par les figures 1, 2 et 5, les ouvertures 115 sont réparties à la périphérie de la bouche d'aspiration 122.

Les ouvertures 115 se présentent sous la forme de fentes en arc de cercle uniformément réparties autour des bouches d'aspiration 122. Les ouvertures 115 forment ainsi des couronnes autour des bouches d'aspiration 122.

Ces ouvertures permettent de créer une recirculation de l'air autour des bouches d'aspiration 122. En effet, le flux d'aspiration F qui se charge de substance attractive dans le caisson ressort par les ouvertures 115 à proximité de bouches d'aspiration 122.

L'air sortant par les ouvertures 115 présente une vitesse inférieure à la vitesse du flux d'aspiration F ce qui permet de limiter les risques variation d'air qui pourraient effrayer les insectes à capturer. Le flux F d'aspiration réaspire alors l'air sortant du caisson 110 par les ouvertures 115 créant une recirculation et une probabilité de capture supérieure du piège 100.

Pour accroître encore l'attractivité du piège 100, la ceinture périphérique 113 présentant des fentes secondaires 116. Ces fentes secondaires 116 permettent l'extraction d'une partie du flux d'aspiration F.

Comme décrit précédemment, le Flux d'aspiration F se charge de la substance attractive via le dispositif de diffusion 150.

Une mineure partie du flux d'aspiration F est extraite du caisson 110 par les fentes secondaires 116 tel qu'illustré par les Flèches F1 sur la figure 3. Le reste du flux d'aspiration F qui est extrait par les ouvertures 115 est illustré par les flèches F2 sur les figures 3 et 5.

L'air expulsé du piège 100 par les fentes secondaires 116 est éjecté de manière douce sensiblement perpendiculairement à la direction de la gravité, jusqu'à plusieurs dizaines de centimètres autour du piège 100, ce qui permet d'attirer les insectes vers le piège 100, ce qui est particulièrement intéressant dans le cadre de la capture des moustiques. En effet, en éjectant l'air chargé de substance attractive par les fentes 115, une bulle attractive est créée autour des bouches d'aspiration 122 du piège 100 ce qui augmente l'attractivité du piège 100 pour les insectes. La dispersion naturelle, via le vent, permet alors d'étendre la bulle attractive jusqu'à plusieurs mètres autour du piège 100.

Avantageusement, l'air éjecté par les fentes secondaires 116 présente une vitesse ne générant pas de perturbation des flux d'air autour des bouches d'aspiration 122du piège 100, de telles perturbations auraient pour effet d'effrayer les insectes, réduisant alors la probabilité de capture.

Toujours dans le cadre de la capture des moustiques, bien que cela ne puisse pas être représenté sur les figures, les deux bouches d'aspiration 122 présentent une première couleur et le caisson 110 présente une deuxième couleur différente de la première couleur pour créer un contraste entre les deux bouches d'aspiration 122 et le caisson 110.

Selon un premier exemple, la première couleur est une couleur sombre et la deuxième couleur est une couleur claire.

Selon un deuxième exemple, inverse au premier exemple précité, la deuxième couleur est une couleur sombre et la première couleur est une couleur claire.

La couleur du caisson 110 est avantageusement choisie en fonction de l'environnement dans lequel le piège 100 est intégré.

Dans une variante de réalisation non illustrée par les figures, les moyens d'aspiration 120 pourraient comprendre, pour chaque paroi inclinée 112, plus d'une bouche d'aspiration 122, par exemple deux, trois ou même quatre.

Tel qu'illustré par la figure 3, le piège 100 est destiné à reposer sur sa paroi support 111 lors de son utilisation pour capturer les insectes effectuant une trajectoire d'approche en plongeant du ciel vers le sol. En variante, le piège 100 pourrait être suspendu par sa paroi support 111 de sorte à autoriser une capture des insectes effectuant une trajectoire de fuite en remontant depuis le sol vers le ciel.

D'une manière avantageuse, lors de son installation, le piège 100 est positionné de telle sorte que les bouches d'aspiration 122 soient situées à une hauteur du sol représentant la hauteur moyenne des mollets d'un être humain adulte, soit entre 30 cm et 35 cm. Cela va à l'encontre des méthodes classiques dans lesquelles les pièges sont généralement positionnés à une hauteur moyenne de 50 à 120 cm.

En fonctionnement, les moyens d'aspiration 120 génèrent le flux d'aspiration F de sorte à créer une zone d'aspiration au niveau des bouches d'aspiration 122 d'une part, et à répandre, autour du piège 100, une substance attractive d'autre part.

Le flux d'aspiration F charrie les insectes depuis les bouches d'aspiration 122 jusqu'aux moyens de retenue 130.

Le flux d'aspiration F traverse les moyens de retenue 130 puis se charge en substance attractive avant d'être expulsé hors du piège 100 par les ouvertures 115 et les fentes secondaires 116.

L'air expulsé par les fentes secondaires 116, chargé en substance attractive, est destiné à se répandre tout autour du piège, jusqu'à une dizaine de mètres alentours pour attirer les insectes vers le piège 100.

En revanche, expulsé par les ouvertures 115, également chargé en substance attractive, est de nouveau aspiré par les bouches d'aspiration 122 créant une recirculation d'air qui offre un pouvoir attractif supplémentaire au piège 100

## Revendications

1. Piège (100) pour insectes volants, comprenant :
- un caisson (110) ;
- des moyens d'aspiration (120) logé dans le caisson (110) et comprenant un dispositif d'aspiration (121) destiné à générer un flux d'aspiration (F) depuis l'extérieur du caisson (110) vers l'intérieur du caisson (110) pour aspirer les insectes volants, et
- des moyens de retenue (130) des insectes volants charriés par le flux d'aspiration (F), **caractérisé en ce que** :
- le caisson (110) comprend une paroi support (111) s'étendant selon un plan transversal à la direction de la gravité et au moins deux parois inclinées (112) par rapport à la paroi support (111) ;
- les moyens d'aspiration (120) comprennent, pour chaque paroi inclinée (112), au moins une bouche d'aspiration (122), les dites bouches d'aspiration (122) étant reliées à un collecteur (123) dirigeant le flux d'aspiration (F) vers les moyens de retenue (130), et
le caisson (110) présente des ouvertures (115) d'évacuation d'air depuis l'intérieur du caisson (110) vers l'extérieur du caisson (110), lesdites ouvertures (115) étant réparties à la périphérie de la bouche d'aspiration (122).

2. Piège (100) selon la revendication précédente, **caractérisé en ce qu'**il comprend également des moyens anti-retour (140), positionnés entre les bouches d'aspiration (122) et les moyens de retenue (130) pour maintenir les insectes captifs du piège (100).

3. Piège (100) selon l'une quelconque des revendications précédentes, **caractérisé en ce que** les moyens de retenue (130) se présentent sous la forme d'un tiroir monté amovible dans le caisson (110).

4. Piège (100) selon la revendication précédente, **caractérisé en ce que** le tiroir comporte des panneaux perméables (131) à l'air permettant le passage du flux d'aspiration (F).

5. Piège 5F) selon l'une des revendications 3 ou 4, **caractérisé en ce que** le caisson (110) présente une trappe (114) d'accès pour l'extraction des moyens de retenue (130) hors du caisson (110).

6. Piège (100) selon l'une quelconque des revendications précédentes, **caractérisé en ce qu'**il comprend également un dispositif de diffusion (150) d'une substance attractive d'insectes volants.

7. Piège (100) selon la revendication précédente, **caractérisé en ce que** le dispositif de diffusion (150) est logé dans le caisson (110).

8. Piège (100) selon la revendication précédente, **caractérisé en ce que** le caisson (110) présente une ceinture périphérique (113) intercalée entre la paroi support (111) et les parois inclinées (112), la ceinture périphérique (113) présentant des fentes secondaires (116) permettant l'extraction d'une partie du flux d'aspiration (F), ledit flux d'aspiration (F) se chargeant de la substance attractive via le dispositif de diffusion (150).

9. Piège (100) selon l'une quelconque des revendications précédentes, **caractérisé en ce que** le dispositif d'aspiration (121) est positionné entre le collecteur (123) et les moyens de retenue (130).

10. Piège (100) selon l'une quelconque des revendications 1 à 8, **caractérisé en ce que** les moyens de retenue (130) sont positionnés entre le dispositif d'aspiration (121) et le collecteur (123).

11. Piège (100) selon l'une quelconque des revendications précédentes, **caractérisé en ce que** le dispositif d'aspiration (121) intègre au moins un ventilateur.

12. Piège (100) selon l'une quelconque des revendications précédentes, **caractérisé en ce que** les bouches d'aspiration (122) présentent une première couleur et le caisson (110) présente une deuxième couleur différente de la première couleur pour créer un contraste entre les bouches d'aspiration (122) et le caisson (110).

13. Piège (100) selon la revendication précédente, **caractérisé en ce que** la première couleur est une couleur sombre et la deuxième couleur est une couleur claire, ou inversement.
